# EUROPÄISCHE PATENTSCHRIFT

(11) **EP 4 064 758 B1**
(45) Veröffentlichungstag und Bekanntmachung des Hinweises auf die Patenterteilung: **24.12.2025**
(21) Anmeldenummer: 21164310.1
(22) Anmeldetag: 23.03.2021
(51) Int. Cl.: H04W 40/00, H04B 7/15, H04B 7/185, H04W 36/22, H04W 28/08, H04W 40/12, H04W 40/22, H04W 40/34, H04W 36/14, H04B 7/26

(54) **VERFAHREN ZUM ROUTEN WENIGSTENS EINES DATENPAKETS VON EINEM ABSENDER ZU EINEM EMPFÄNGER MITTELS EINER MEHRZAHL VON NETZKNOTEN EINES TELEKOMMUNIKATIONSNETZES, TELEKOMMUNIKATIONSNETZ ODER SYSTEM, RELAIS-ROUTING-KNOTEN, RELAIS-KNOTEN, KNOTEN-LAST-DETEKTOR ODER KNOTEN-LAST-KOLLEKTOR, COMPUTERPROGRAMM UND COMPUTERLESBARES MEDIUM**
METHOD FOR ROUTING AT LEAST ONE DATA PACKET FROM A SENDER TO A RECIPIENT BY MEANS OF A PLURALITY OF NETWORK NODES OF A TELECOMMUNICATIONS NETWORK, TELECOMMUNICATIONS NETWORK OR SYSTEM, RELAY ROUTING NODE, RELAY NODE, NODE LOAD DETECTOR OR NODE LOAD COLLECTOR, COMPUTER PROGRAM, AND COMPUTER READABLE MEDIUM
PROCÉDÉ DE ROUTAGE D'AU MOINS UN PAQUET DE DONNÉES D'UN ÉMETTEUR À UN RÉCEPTEUR AU MOYEN D'UNE PLURALITÉ DE NOEUDS DANS UN RÉSEAU DE TÉLÉCOMMUNICATION, RÉSEAU OU SYSTÈME DE TÉLÉCOMMUNICATION, NOEUD DE ROUTAGE ET DE RELAIS, NOEUD DE RELAIS, DÉTECTEUR DE CHARGE DE NOEUD OU COLLECTEUR DE CHARGE DE NOEUD, PROGRAMME INFORMATIQUE ET SUPPORT LISIBLE PAR ORDINATEUR

(43) Veröffentlichungstag der Anmeldung: 28.09.2022
(73) Patentinhaber: Deutsche Telekom AG, 53113 Bonn (DE)
(72) Erfinder: WITYCH, Michael, Dr., 53227 Bonn (DE); BAU, Wolfgang, 53639 Königswinter (DE)
(74) Vertreter: Schwöbel, Thilo K.

(56) Entgegenhaltungen:
- WO-A2-2007/113645
- JP-A- 2002 368 787
- US-A1- 2002 073 225
- APPINI NARAYANA RAO ET AL: "QoS Aware Multicast Framework based on WayPoint routing for Hybrid Wireless Mesh Networks", IEEE INTERNATIONAL CONFERENCE ON ELECTRICAL, COMPUTER AND COMMUNICATION TECHNOLOGIES (ICECCT), 2015, 5-7 MARCH 2015, COIMBATORE, IEEE, 5 March 2015 (2015-03-05), pages 1 - 8, XP033210328, ISBN: 978-1-4799-6084-2, [retrieved on 20150826], DOI: 10.1109/ICECCT.2015.7226172
- "Software Defined Mobile Networks (SDMN) : Beyond LTE Network Architecture", 6 July 2015, JOHN WILEY & SONS, LTD, Chichester, UK, ISBN: 978-1-118-90028-4, article AKRAM HAKIRI ET AL: "Leveraging SDN for the 5G Networks : Beyond LTE Network Architecture : Trends, Prospects, and Challenges", pages: 61 - 80, XP055674656, DOI: 10.1002/9781118900253.ch5
- MISRA SUDIP ET AL: "Selected Topics in Communication Networks and Distributed Systems", 1 April 2010 (2010-04-01), pages 243 - 260, XP055835596, ISBN: 978-981-2839-44-2, Retrieved from the Internet <URL:http://dx.doi.org/10.1142/9789812839442_0009> DOI: 10.1142/9789812839442_0009
- MONTOYA JES�S FABI�N MENDOZA: "Satellite Integration in 5G: Contribution on Network Architectures and Traffic Engineering Solutions for Hybrid Satellite-Terrestrial Mobile Backhauling", DOCTORAL THESIS, 17 February 2019 (2019-02-17), Barcelona, Spain, pages 1 - 193, XP093007256, Retrieved from the Internet <URL:https://upcommons.upc.edu/bitstream/handle/2117/134748/TJFMM1de1.pdf?sequence=1&isAllowed=y> [retrieved on 20221212]

## Beschreibung

### Stand der Technik

Die Erfindung betrifft ein Verfahren zum Routen wenigstens eines Datenpakets von einem Absender zu einem Empfänger mittels einer Mehrzahl von Netzknoten eines Telekommunikationsnetzes, wobei mittels des Telekommunikationsnetzes das wenigstens eine Datenpaket zumindest teilweise über ein erstes Telekommunikationsteilnetz umfassend erdgebundene Netzknoten und zumindest teilweise über ein zweites Telekommunikationsteilnetz umfassend satellitengebundene Netzknoten geroutet wird.

Die Erfindung betrifft des Weiteren ein Telekommunikationsnetz oder System zum Routen wenigstens eines Datenpakets von einem Absender zu einem Empfänger mittels einer Mehrzahl von Netzknoten des Telekommunikationsnetzes, wobei mittels des Telekommunikationsnetzes das wenigstens eine Datenpaket zumindest teilweise über ein erstes Telekommunikationsteilnetz umfassend erdgebundene Netzknoten und zumindest teilweise über ein zweites Telekommunikationsteilnetz umfassend satellitengebundene Netzknoten geroutet wird.

Die Erfindung betrifft ferner ein Relais-Routing-Knoten, Relais-Knoten, Knoten-Last-Detektor oder Knoten-Last-Kollektor zur Verwendung in einem erfindungsgemäßen Telekommunikationsnetz oder System.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Bei bekannten Telekommunikationsnetz, insbesondere Internet-Protokoll-Netzen, d.h. solchen Telekommunikationsnetz, welche auf der Nutzung des Internet Protokolls (IP) beruhen, ist ein Neurouten bzw. eine Änderung von Routing-Entscheidungen für den Transport von Datenpaketen von einem ersten Punkt zu einem zweiten Punkt (bzw. von einem Sender zu einem Empfänger) zwar bereits möglich, aber dieses Neurouten geschieht oftmals erst dann, wenn der Engpass (aufgrund des durchgeführten Transports eines betrachteten Datenpakets bzw. einer Mehrzahl von betrachteten Datenpakten) bereits erfährt, also auch zu diesem beiträgt und diesen erhöht. Außerdem geschieht ein solches Neurouten bzw. eine solche Änderung von Routing-Entscheidungen bisher eher ungezielt und darüber hinaus höchstens erst innerhalb eines Überlastgebiets.

Folgendes Dokument ist relevant: "Satellite Integration in 5G: Contribution on Network Architectures and Traffic Engineering Solutions for Hybrid Satellite-Terrestrial Mobile Backhauling" von Montoya Jesús Fabián Mendoza, 17. Februar 2019.

### Offenbarung der Erfindung

Der Erfindung liegt die Aufgabe zugrunde, ein Verfahren zum Routen wenigstens eines Datenpakets von einem Absender zu einem Empfänger mittels einer Mehrzahl von Netzknoten eines Telekommunikationsnetzes, wobei mittels des Telekommunikationsnetzes das wenigstens eine Datenpaket zumindest teilweise über ein erstes Telekommunikationsteilnetz umfassend erdgebundene Netzknoten und zumindest teilweise über ein zweites Telekommunikationsteilnetz umfassend satellitengebundene Netzknoten geroutet wird, wobei es das Verfahren in vergleichsweise einfacher und effizienter Weise ermöglicht, sowohl eine schnelle Kommunikation oder Datenübertragung zu ermöglichen als auch eine Überlastung von Telekommunikationsteilnetzen zu vermeiden.

Die Aufgabe wird erfindungsgemäß gelöst durch ein Verfahren zum Routen wenigstens eines Datenpakets von einem Absender zu einem Empfänger mittels einer Mehrzahl von Netzknoten eines Telekommunikationsnetzes, wobei mittels des Telekommunikationsnetzes das wenigstens eine Datenpaket zumindest teilweise über ein erstes Telekommunikationsteilnetz umfassend erdgebundene Netzknoten und zumindest teilweise über ein zweites Telekommunikationsteilnetz umfassend satellitengebundene Netzknoten geroutet wird, wobei in wenigstens einem Teilbereich des ersten Telekommunikationsteilnetzes eine zu geringe Quality-of-Service-Situation oder eine Überlastsituation detektiert wird und eine korrespondierende Überlastinformation oder Quality-of-Service-Information an einen als Relais-Routing-Knoten fungierenden Netzknoten übertragen wird, wobei das wenigstens eine Datenpaket als ein auf eine Echtzeitanwendung bezogenes oder als ein prioritär zu transportierendes Datenpaket behandelt wird, wobei das Verfahren die nachfolgenden Schritte umfasst:
-- in einem ersten Schritt wird durch den Relais-Routing-Knoten des ersten Telekommunikationsteilnetzes eine Umrouting-Entscheidung bezüglich des wenigstens einen Datenpakets getroffen, wobei das Datenpaket mit einer Mehrzahl von Via-Punkt-Informationen ergänzt wird, wobei die Via-Punkt-Informationen jeweils auf Relais-Knoten bezogen sind, die jeweils einen Übergang zwischen dem ersten Telekommunikationsteilnetz und dem zweiten Telekommunikationsteilnetz bilden oder ermöglichen,
-- in einem zweiten, dem ersten Schritt nachfolgenden, Schritt wird das wenigstens eine Datenpaket über die den Via-Punkt-Informationen entsprechenden Relais-Knoten zum Empfänger oder in Richtung zum Empfänger geroutet, wobei jeweils nach einem Passieren eines Relais-Knotens die diesem Relais-Knoten zugeordnete Via-Punkt-Information aus dem wenigstens einen Datenpaket gelöscht wird.

Es ist dadurch gemäß der vorliegenden Erfindung in vorteilhafter Weise möglich, dass in Vergleichsweise einfacher Art und Weise ein gezieltes Umrouten bzw. Neurouten beim Transport von Datenpaketen in Telekommunikationsnetzen bzw. insbesondere IP-Netzen erfolgen kann. Im Kontext der vorliegenden Erfindung werden die Begriffe "Umrouten" bzw. "Umrouting" synonym benutzt.

Bei herkömmlicherweise bekannten Telekommunikationsnetzen oder IP-Netzen erfolgt das Neurouten insbesondere nicht durch die gleichzeitige Berücksichtigung eines Überlastgebiets oder mehrerer Überlastgebiete noch vor oder innerhalb des ersten Überlastgebiets. Außerdem geschieht bei bekannten RoutingVerfahren das Umrouten (bzw. das Neurouten) "terrestrischer Daten" nicht gezielt über ein Satellitennetz. Dadurch ist es prinzipiell bei bekannten Verfahren insbesondere für zeitkritische Anwendungen wie Telefonie nicht a priori einen möglicherweise erhöhten Zeitverzug (bzw. eine erhöhte Latenz) verhindern.

Erfindungsgemäß ist es bevorzugt möglich und vorgesehen, dass die Frage ob und welche Daten (bzw. Datenpakete) neu geroutet (oder anders geroutet) werden sollen (d.h. insbesondere unter Verwendung des Satellitennetzes als Telekommunikationsteilnetz), möglichst frühzeitig auf dem üblichen Routingweg vor einem Überlastgebiet erfolgen sollte. Mehrere Überlastgebiete auf einem üblichen Routingweg könnten erfindungsgemäß ebenfalls berücksichtigt werden, d.h. also "umroutet" werden können.

Bei der Zielsetzung ist erfindungsgemäß insbesondere zu beachten, dass - wenn Überlastgebiete entlastet werden - dieses allen zeitgleich (und etwas später nach der Entlastung wegen fehlendem Stauabbaueffekt) durch dieses Gebiet gerouteten Datenpaketen zu Gute kommt. Sollten nur wenige oder zu wenige Datenpakete durch ein Entlastungsrouting neu geroutet werden und somit im Überlastgebiet immer noch eine zeitweilige Überlast verbleiben, so profitieren die neu gerouteten Datenpakete von dem Mechanismus eines Entlastungsrouting zu 100% und die nicht neu gerouteten nur teilweise oder nur zeitweilig.

Gemäß der vorliegenden Erfindung ist es insbesondere vorgesehen, dass Satelliten nur mit erdgebundenen Relais Stationen (RN, Relay Nodes - besondere hybride Knoten im Mobilfunknetz) auf der Erdoberfläche verbunden werden und diese Relais Stationen sind dann mit den Telekommunikationsendgeräten (nachfolgend auch UE, user equipment, genannt bzw. im Plural als UEs bezeichnet) verbunden, wobei die Verbindung auch über weitere normale Standard Knoten (KS) des Mobilfunknetzes geroutet werden kann und in der Regel auch wird. Ein handelsübliches UE muss nur das terrestrische Zellular-Netz (bzw. Mobilfunknetz) nutzen können. Ein solches UE hat gegenüber einem Satellitentelefon den Vorteil, dass es die Verbindung zu einem Satelliten nicht direkt herstellen muss, was bzgl. der zu nutzenden Frequenzen und insbesondere der notwendigen reduzierten Sendeleistung vorteilhaft ist. Eine Adressierung des Zielgebiets (auf der Erdoberfläche, also im terrestrischen Zellular-Netz) der Verbindung sei in bekannter Weise z. B. via Rufnummernvorwahl oder IP-Adresse zu einem anzurufenden UE gegeben.

Erfindungsgemäß wird somit ein lastabhängiges QoS-bedingtes Routing in hybriden Kommunikationsnetzen (umfassend ein erstes Telekommunikationsteilnetz und ein zweites Telekommunikationsteilnetz, beispielhaft bestehend aus Satellitennetzen und terrestrischen Netzen, insbesondere zellularen Mobilfunknetzen) vorgeschlagen, wobei zeitlich und örtlich begrenzt
-- entweder eine aktuelle "Überlast" (d.h. Quality-of-Service Werte befinden sich unterhalb definierter Schwellwerte) auf den potenziellen Routingwegen erkannt werden soll
-- oder eine zukünftige "Überlast" auf den potenziellen Routenwegen vermieden werden soll.

Die Last in einem Gebiet oder eine - möglichst nicht zu überschreitende - Grenze der Last, bezieht sich auf die Gefahr der Überlast von Kommunikationsnetzfunktionen z. B. bezogen auf die Anzahl der gleichzeitig genutzten Mobilfunk UEs je Funkzelle bzw. bei mehreren Zellen oder in einem geographischen Gebiet im terrestrischen Netz oder auf die genutzte Datenbandbreite. Eine Überlast im System wirkt sich (im Mittel) verschlechternd auf die Qualität von Kommunikationsdiensten aus (QoS, Quality of Service). Erfindungsgemäß kommen mehrere QoS Kriterien in Frage; allgemein ist es möglich, eine Gewichtsfunktion (Zielfunktion) bestehend aus Abhängigkeiten zu unterschiedlichen QoS Einzel-Kriterien zu nutzen, um die Dienstgüte bzw. Quality-of-Service spezifisch zu definieren, d.h. insbesondere wann eine Überlast existiert und durch welche Faktoren sie beseitigt oder vermieden werden kann.

Alle diese Faktoren sind vom Routenweg, d.h. der Verbindung vom Absender (bzw. Absender Telekommunikationsendgerät, nachfolgend auch als UE1 bezeichnet) zum Empfänger (bzw. Empfänger-Telekommunikationsendgerät, nachfolgend auch als UE2 bezeichnet) abhängig, weswegen die Erfindung sich auf das Verfahren zur geeigneten Auswahl der Route bzw. des Routens in hybriden Telekommunikationsnetzen (d.h. umfassend ein erstes Telekommunikationsteilnetz und ein zweites Telekommunikationsteilnetz) konzentriert. Erfindungsgemäß wird davon ausgegangen, dass:
-- diese Einzel-Faktoren mit ausreichender Aktualität detektierbar sind bzw. erhoben werden können bzw. dies geschieht (Monitoring) und/oder
-- diese Einzel-Faktoren aus Historiendaten und/oder Prognosemodellen ausreichend genau vorhergesagt werden können,
um damit Vorgaben für das gezielte Neurouten von Datenpaketen ableiten zu können.

Beispielhaft wird erfindungsgemäß die Nutzung von hybriden Netzen wie ein Satellitennetz und ein terrestrisches zellulares Mobilfunknetz betrachtet; verallgemeinert ist jedoch eine gemeinsame aufeinander abgestimmte Nutzung von satellitenbasierten und terrestrischen Netzen (bzw. Telekommunikationsteilnetzen) vorgesehen, wobei handelsübliche Mobilfunkgeräte bzw. Telekommunikationsendgeräte (UE, UE1, UE2) genutzt werden, die z.B. mit einem Mobilfunkmast (bzw. einer eNB, gNB oder Basisstationseinrichtung) verbunden sind. Das erdgebundene Mobilfunknetz ermöglicht die Kommunikation zwischen den UEs, wobei diese Kommunikation über Knotenpunkte geroutet wird. Das genutzte erdgebundene Kommunikationsnetz kann aber auch ein hybrides erdgebundenes Netz sein und z. B. bestehen aus Mobilfunkmasten, Backhaul-Verbindungskabeln zwischen ausgewählten Mobilfunkmasten von Hauptknoten oder allgemeine Kabelverbindungen und insbesondere auch Überseekabel. Ein Knoten in einem solchen Netz muss keine Einwahlmöglichkeit für ein UE bereitstellen, sondern kann auch nur zu einer Verzweigung des Netzes dienen. Dieses ist z. B. aus dem Internet bekannt, worin auch Mobilfunkdaten übertragen werden können. Ein UE kann sich auch z. B. über WLAN oder andere Nahbereichsfunkmethoden mit solch einem hybriden erdgebundenen Netz verbinden.

Weiterhin ist es gemäß der vorliegenden Erfindung vorgesehen, dass dieses Quality-of-Service-basierte Umrouten mit geringem Datenerhebungsaufwand (bzgl. gebietsspezifischer aktueller Auslastung insbesondere der Überlastgebiete), mit gebietsspezifisch differenziert dichten Sonderfunktionalitäten (Knoten-Last-Detektor, Knoten-Last-Kollektor, Relais-Routing-Knoten, Relais-Knoten) in den Netz Knoten sowie nur geringem Steuerungsaufwand durchgeführt werden kann.

Hierzu sollen beispielhaft die in der Regel nur selten und immer nie örtlich gleichmäßig ausgelasteten Satelliten eines Satellitennetzes als Telekommunikationsteilnetz genutzt werden. Ein Satellitennetz mit beweglichen Satelliten ist ein örtlich in der Regel gleichmäßig konzipiertes Netz, das aber oft (aufgrund z. B. bei LEO (low earth orbiter) Satelliten vorhandenen Pol-Bahnen) zu den Polen hin, auf/über den Ozeanen und in/über ländlichen Gebieten immer gering ausgelastet ist, sofern es nur für sich allein betrieben wird.

Die potentiellen freien Last-Kapazitäten eines solchen Satellitennetzes können erfindungsgemäß genutzt werden, damit ein erdgebundenes Kommunikationsnetz (bzw. Telekommunikationsteilnetz) bzgl. seiner QoS Anforderungen durch die örtlichen und zeitlichen Engpässe, die kostenbedingt existieren, nicht in seinen Hotspot Gebieten zu schlechte QoS Werte zeitigt. Die Netze (bzw. Telekommunikationsteilnetz) müssen somit in eng aufeinander abgestimmter Koexistenz betrieben werden, was jedoch zwischen satellitenbasierten und terrestrischen Netzen aber nicht vorliegt. Für die Zielrichtung gemäß der vorliegenden Erfindung sind LEO (low earth orbiter) Satellitensysteme besonders geeignet, da dann Übertragungszeiten zwischen einem terrestrischen und einem Satelliten-Netz (bzw. Telekommunikationsteilnetzen) besonders kurz sind. Die direkte oder indirekte Einbindung höherstehender Satelliten (MEO, medium earth orbit, GEO, geosynchronuous orbit) sind für weniger zeitkritische Anwendungen aber ebenfalls geeignet.

Beim erfindungsgemäßen Verfahren wird somit ein Routing eines Datenpakets (bzw. in der Regel einer Mehrzahl von Datenpaketen) von einem Absender zu einem Empfänger innerhalb eines Telekommunikationsnetzes durchgeführt, wobei das Telekommunikationsnetz einer Mehrzahl von Netzknoten umfasst. Das Telekommunikationsnetz umfasst hierbei wenigstens ein erstes Telekommunikationsteilnetz und ein zweites Telekommunikationsteilnetz. Mittels des Telekommunikationsnetzes das wenigstens eine Datenpaket zumindest teilweise über das erste Telekommunikationsteilnetz umfassend erdgebundene Netzknoten und zumindest teilweise über das zweite Telekommunikationsteilnetz umfassend satellitengebundene Netzknoten geroutet. Erfindungsgemäß wird der Fall betrachtet, dass in wenigstens einem Teilbereich des ersten Telekommunikationsteilnetzes eine zu geringe Quality-of-Service-Situation oder eine Überlastsituation detektiert wird und eine korrespondierende Überlastinformation oder Quality-of-Service-Information an einen als Relais-Routing-Knoten fungierenden Netzknoten übertragen wird. Das wenigstens eine Datenpaket (bzw. die Mehrzahl an Datenpaketen) ist (bzw. sind) hierbei auf eine Echtzeitanwendung bezogen oder wird (bzw. werden) als ein prioritär zu transportierend behandelt. Gemäß dem erfindungsgemäßen Verfahren wird:
-- in einem ersten Schritt durch den Relais-Routing-Knoten des ersten Telekommunikationsteilnetzes eine Umrouting-Entscheidung bezüglich des wenigstens einen Datenpakets getroffen, wobei das Datenpaket mit einer Mehrzahl von Via-Punkt-Informationen ergänzt wird, wobei die Via-Punkt-Informationen jeweils auf Relais-Knoten bezogen sind, die jeweils einen Übergang zwischen dem ersten Telekommunikationsteilnetz und dem zweiten Telekommunikationsteilnetz bilden oder ermöglichen,
-- in einem zweiten, dem ersten Schritt nachfolgenden, Schritt das wenigstens eine Datenpaket über die den Via-Punkt-Informationen entsprechenden Relais-Knoten zum Empfänger oder in Richtung zum Empfänger geroutet, wobei jeweils nach einem Passieren eines Relais-Knotens die diesem Relais-Knoten zugeordnete Via-Punkt-Information aus dem wenigstens einen Datenpaket gelöscht wird.

Erfindungsgemäß wird vorausgesetzt, dass bekannte entsprechende Protokoll- und Frequenztransformationen beim Übergang der zwei Netztypen (bzw. Telekommunikationsteilnetze) vorhanden sind und dass ein Routing über nur 2 Via Knoten (einen zeitlich ersten und einen zeitlich zweiten) in diesen Protokollen definiert ist oder hinzugefügt werden kann, wobei die 2 Via Knoten im unverschlüsselten Bereich des Protokolls liegen, z.B. in der Transportschicht. Aufgrund der beweglichen LEO oder MEO Satelliten ist ein Zwangsrouting innerhalb eines Satellitennetzes (ISL = Inter-Satelliten-Links) sehr aufwendig und i.d.R. nie wirklich optimal, da es sehr stark zeitabhängig ist. Erfindungsgemäß werden die bekannten zeit- und lastabhängigen Inter-Satelliten Routings vorausgesetzt. Routingverfahren im terrestrischen Netz sind ebenfalls bekannt und haben gegenüber den Satellitennetzen mit beweglichen Satelliten u. a. drei Vorteile:
-- den Vorteil statischer Knotenpositionen auf der Erde,
-- den Vorteil dauerhaft statischer Verbindungsmöglichkeiten zwischen zwei geographisch benachbarten Knoten, sowie
-- den Vorteil, dass das Routing zwischen Anfangs- und Endknoten über deren Zwischenknoten sich mit einer gewissen Wahrscheinlichkeit a priori auf geografisch bekannte Routenkorridore eingrenzen lässt.

Im terrestrischen Netz kann selbst ein dynamisches IP-basiertes Routing ausreichend genau für die Zwecke der Erfindung über Knoten-Korridore und deren geographische Lage (d.h. die Position der Knoten oder durch Polygonzüge begrenzte geographische Fläche) und ihnen zugeordneten Wahrscheinlichkeiten der Nutzung vorhergesagt werden (insbesondere, mit wieviel Prozent Wahrscheinlichkeit ein Datenpaket nicht außerhalb des Korridors geroutet werden wird). Die geographischen Korridorbegrenzungen unterliegen somit einer entsprechenden Ungenauigkeit. Erfindungsgemäß ist insbesondere vorgesehen, dies mit den aktuell gemessenen und/oder prognostizierten Quality-of-Service-Werten von Teilgebieten des Routenkorridors, durch die eine wahrscheinliche Route gehen wird, abzugleichen, um Steuerungsmaßnahmen beim Routing über zwei Via Punkte vorzunehmen. Erfindungsgemäß muss nun zusätzlich entlang des wahrscheinlichen terrestrischen Knoten-Wegekorridors eines zu routenden Datenpaketes bekannt sein, in welchen Teilgebieten (bestehend aus mehreren miteinander verbundenen Knoten) des Wegekorridors eine Gefahr (oberhalb einer vorgegebenen Wahrscheinlichkeit) auf Überlastung der Kommunikation besteht oder sogar schon eingetreten ist. Erfindungsgemäß ist insbesondere vorgesehen, dies für die relevanten potenziellen Überlastgebiete, die Flächenanteile im Wegekorridor besitzen,
-- fortlaufend in vorgegebenen Zeitabständen in den zugeordneten Knoten-Last-Detektor zu erheben,
-- in den zugeordneten Knoten-Last-Kollektor für die potenziellen Überlastgebiete des Wegekorridors zu aggregieren und
-- an die im Wegekorridor vorliegenden Relais-Routing-Knoten zu senden (vorzugsweise an alle Relais-Routing-Knoten des gesamten terrestrischen Netzes, da diese Informationen auch für andere insbesondere sich überschneidende Wegekorridore bereitstehen muss).

Die notwendige Dichte der unterschiedlichen Funktionalitäten in den KS als auch die Dichte der Relais-Knoten kann aufgrund von Quality-of-Service-Prognosemodellen, dem Abstimmungsaufwand zwischen den Funktionalitäten und den Installations- und Betriebskosten im Abgleich mit dem Nutzen bzgl. Quality-of-Service-Verbesserung und geringeren Ausbaukosten der terrestrischen Netze festgelegt werden.

Will ein terrestrisches UE1 mit einem ebenfalls terrestrischen UE2 kommunizieren, so enthält der initiale Request und jedes weitere Datenpakete die Zieladresse des UE2. Erfindungsgemäß ist eine Zieladresse des UE2 definiert durch Identifier, wobei Identifier beispielsweise sein können: MSISDN (Mobile Station International Subscriber Directory Number) oder IP Adresse (IPv4 oder IPv6 IP-Adresse). Verschiedene IP-Adressen Bereiche werden an Internet-Provider, große Unternehmen und Behörden verteilt. Der Entfernung des jeweiligen Internet Einwahlknotens entsprechend, nimmt die Ortsbestimmung an Präzision zu oder ab.

Erfindungsgemäß können die Routen für Signalisierung einerseits (d.h. Datenpakete, welche (als Nutzdaten) Signalisierungsdaten transportieren) und Nutzdaten andererseits (d.h. Datenpakete, welche (als Nutzdaten) Benutzerdaten, etwa Mediadaten, transportieren) können komplett unterschiedlich sein (insbesondere realisiert mittels 5G CUPS - Control and User Plane Separation).

Außerdem sei aufgrund von Erfahrungswerten der x%-tige Routenkorridor bekannt, innerhalb dessen sich jedes Datenpaket "bewegen" wird. Der x%-tige Routenkorridor ist durch die "Routenkorridorgrenze" oder durch geographische Polygone bzw. Unschärfebereiche beschrieben. Ganz allgemein kann gesagt werden, dass Unschärfen/Fehlerbereiche von relevanten Inputparametern sich auf die Güte der Entscheidungen von Zielfunktionen in bekannter Weise z. B. über Fehlerfortpflanzungsmodelle beschreiben lassen (was dem Ausgleichungsfachmann bekannt ist) und in der Erfindung nicht für alle Parameter oder Formeln beschrieben wird. In den Figuren werden nur die Unschärfen für Teilgebiete und Routenkorridore grafisch dargestellt, um ein besseres Gefühl für Abhängigkeiten zu vermitteln und davon abhängige Routenentscheidungen zu erläutern.

Auf dem Routenweg von UE1 (d.h. vom Absender) zu UE2 (d.h. zum Empfänger) über die Knoten KS sollte dann möglichst frühzeitig ein KS passiert werden, der auch die Funktionalität Relais-Routing-Knoten vorliegen hat, also ein Relais-Routing-Knoten ist; ein solcher weiß, durch welche problematischen Teilgebiete bei Standardrouten ohne Via Punkte zu routen ist und wann dieses umgegangen werden sollte. Also welche alternativen Routenwege über jeweils zwei Relais-Knoten 1 Relais-Knoten 2 Via Knoten (oder KS1/KS2) gewählt werden sollten. Das Routen zum ersten Relais-Routing-Knoten auf der Route ist durch die Erfindung nicht beeinflusst und beruht auf einem der bekannten Routingverfahren. Die am höchsten priorisierte Via Route z. B. über die "beste" Relais-Knoten 1- zu Relais-Knoten 2 Knoten-Verbindung repräsentiert die Entscheidung einer Zielfunktion, die in den Relais-Routing-Knoten genutzt wird, um die beste Kombination aus Relais-Knoten 1 und Relais-Knoten 2 zu ermitteln. Diese Zielfunktion berücksichtigt insbesondere die Quality-of-Service-Werte der Teilgebiete T1, T2, T3, ..., Tz, die im Standard Routenkorridor ohne Umrouten liegen. Hierbei muss dieser Routenkorridor aber nicht komplett durch Teilgebiete abgedeckt bzw. beschrieben sein, sondern nur die wichtigsten Überlastgebiete mit den relevanten Auswirkungen auf Quality-of-Service-Werte sollten definiert sein.

Gemäß einer bevorzugten Ausführungsform der vorliegenden Erfindung ist es vorgesehen, dass im ersten Schritt das wenigstens eine Datenpaket mit einer ersten Via-Punkt-Information und einer zweiten Via-Punkt-Information ergänzt wird, wobei die erste Via-Punkt-Information auf einen ersten Relais-Knoten bezogen ist und die zweite Via-Punkt-Information auf einen zweiten Relais-Knoten bezogen ist, wobei das wenigstens eine Datenpaket zwischen dem ersten und zweiten Relais-Knoten mittels Satelliten im zweiten Telekommunikationsteilnetz transportiert wird, indem im zweiten Schritt nach dem Passieren des ersten Relais-Knotens die erste Via-Punkt-Information aus dem wenigstens einen Datenpaket gelöscht wird und nach dem Passieren des zweiten Relais-Knotens die zweite Via-Punkt-Information aus dem wenigstens einen Datenpaket gelöscht wird.

Hierdurch ist es erfindungsgemäß vorteilhaft möglich, dass ein Überlastgebiet beim Transport des Datenpakets vermieden oder umgangen werden kann.

Gemäß einer weiteren Ausführungsform der vorliegenden Erfindung ist es vorgesehen, dass an einem weiteren als Relais-Routing-Knoten fungierenden Netzknoten, insbesondere zwischen dem zweiten Relais-Knoten und dem Empfänger eine weitere Umrouting-Entscheidung bezüglich des wenigstens einen Datenpakets getroffen wird, wobei das Datenpaket erneut mit einer Mehrzahl von Via-Punkt-Informationen ergänzt wird, wobei die Via-Punkt-Informationen jeweils auf Relais-Knoten bezogen sind.

Hierdurch ist es erfindungsgemäß in vorteilhafter Weise möglich, dass erfindungsgemäß die Verfahrensschritt auch mehrfach (bezogen auf den Transport des gleichen Datenpakets bzw. der Mehrzahl an Datenpaketen) durchgeführt werden kann.

Gemäß einer weiteren Ausführungsform der vorliegenden Erfindung ist es vorgesehen, dass durch eine Mehrzahl von zwischen dem Absender und dem Empfänger transportierten Datenpaketen eine asynchrone Kommunikation zwischen dem Absender und dem Empfänger realisiert wird, wobei hinsichtlich jedes solchen Datenpakets eine separate oder unabhängige Umrouting-Entscheidung, insbesondere umfassend eine Mehrzahl von Via-Punkt-Informationen und sich beziehend auf unabhängig definierte Relais-Knoten, getroffen wird.

Hierdurch ist es erfindungsgemäß insbesondere vorteilhaft möglich, dass in flexibler Weise unterschiedliche Datenpakete hinsichtlich des durchgeführten Routings unterschiedlich behandelt werden und so optimiert transportiert werden können.

Gemäß einer weiteren Ausführungsform der vorliegenden Erfindung ist es vorgesehen, dass - in Vorbereitung der bezüglich des wenigstens einen Datenpakets getroffenen Umrouting-Entscheidung des ersten Schritt - in einem ersten Teilschritt des ersten Schritts ein ausschließlich innerhalb des ersten Telekommunikationsteilnetzes verlaufender, erwarteter Routenkorridor zwischen dem Absender und dem Empfänger geprüft wird, wobei die Umrouting-Entscheidung im Falle einer zu geringen Quality-of-Service-Situation oder einer Überlastsituation in wenigstens einem Teilbereich des ersten Telekommunikationsteilnetzes getroffen wird, wobei das erste Telekommunikationsteilnetz als Teil der Netzknoten neben den Relais-Routing-Knoten und den Relais-Knoten eine Mehrzahl an Knoten-Last-Detektoren und eine Mehrzahl an Knoten-Last-Kollektoren aufweist, wobei die Knoten-Last-Detektoren und die Knoten-Last-Kollektoren die Überlastinformation und/oder die Quality-of-Service-Information an die Relais-Routing-Knoten übertragen.

Hierdurch ist es gemäß solcher Ausführungsformen der Erfindung vorteilhaft möglich, dass der Datentransport innerhalb des Telekommunikationsnetz sowie innerhalb der jeweiligen Telekommunikationsteilnetze optimiert durchgeführt werden kann.

Gemäß einer weiteren Ausführungsform der vorliegenden Erfindung ist es vorgesehen, dass die durch den Relais-Routing-Knoten getroffene Umrouting-Entscheidung bezüglich des wenigstens einen Datenpakets von der Quality-of-Service-Information oder Überlastinformation oder von mehreren Quality-of-Service-Informationen oder von mehreren Überlastinformationen abhängt, insbesondere von einer oder mehrerer der nachfolgenden Informationen:
-- der Lastsituation und/oder einer Quality-of-Service-Information in einem Teilbereich oder in mehreren Teilbereichen des ersten Telekommunikationsteilnetzes oder des zweiten Telekommunikationsteilnetzes,
-- von Routenkorridoren und/oder Ausweichgebieten und/oder der geographischen Lage des Absenders und/oder des Empfängers,
-- von Trigger-Werten für Entscheidungen, insbesondere Threshold-Werte.

Des Weiteren wird die Aufgabe gelöst durch ein Telekommunikationsnetz oder System zum Routen wenigstens eines Datenpakets von einem Absender zu einem Empfänger mittels einer Mehrzahl von Netzknoten des Telekommunikationsnetzes, wobei mittels des Telekommunikationsnetzes das wenigstens eine Datenpaket zumindest teilweise über ein erstes Telekommunikationsteilnetz umfassend erdgebundene Netzknoten und zumindest teilweise über ein zweites Telekommunikationsteilnetz umfassend satellitengebundene Netzknoten geroutet wird, wobei in wenigstens einem Teilbereich des ersten Telekommunikationsteilnetzes eine zu geringe Quality-of-Service-Situation oder eine Überlastsituation detektiert wird und eine korrespondierende Überlastinformation oder Quality-of-Service-Information an einen als Relais-Routing-Knoten fungierenden Netzknoten übertragen wird, wobei das wenigstens eine Datenpaket als ein auf eine Echtzeitanwendung bezogenes oder als ein prioritär zu transportierendes Datenpaket behandelt wird, wobei das Telekommunikationsnetz oder das System derart konfiguriert sind, dass:
-- durch den Relais-Routing-Knoten des ersten Telekommunikationsteilnetzes eine Umrouting-Entscheidung bezüglich des wenigstens einen Datenpakets getroffen wird, wobei das Datenpaket mit einer Mehrzahl von Via-Punkt-Informationen ergänzt wird, wobei die Via-Punkt-Informationen jeweils auf Relais-Knoten bezogen sind, die jeweils einen Übergang zwischen dem ersten Telekommunikationsteilnetz und dem zweiten Telekommunikationsteilnetz bilden oder ermöglichen, sowie
-- das wenigstens eine Datenpaket über die den Via-Punkt-Informationen entsprechenden Relais-Knoten zum Empfänger oder in Richtung zum Empfänger geroutet werden, wobei jeweils nach einem Passieren eines Relais-Knotens die diesem Relais-Knoten zugeordnete Via-Punkt-Information aus dem wenigstens einen Datenpaket gelöscht wird.

Es ist dadurch gemäß der vorliegenden Erfindung in vorteilhafter Weise möglich, ein zum erfindungsgemäßen Verfahren korrespondierendes erfindungsgemäßes Telekommunikationsnetz oder System bereitzustellen.

Die Aufgabe wird ferner gelöst durch ein Relais-Routing-Knoten, Relais-Knoten, Knoten-Last-Detektor oder Knoten-Last-Kollektor zur Verwendung in einem erfindungsgemäßen Telekommunikationsnetz oder System.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf einem Netzknoten in Form eines Relais-Routing-Knotens und/oder eines Relais-Knotens und/oder eines Knoten-Last-Detektors und/oder eines Knoten-Last-Kollektors, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung, insbesondere auf einem Netzknoten in Form eines Relais-Routing-Knotens und/oder eines Relais-Knotens und/oder eines Knoten-Last-Detektors und/oder eines Knoten-Last-Kollektors, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

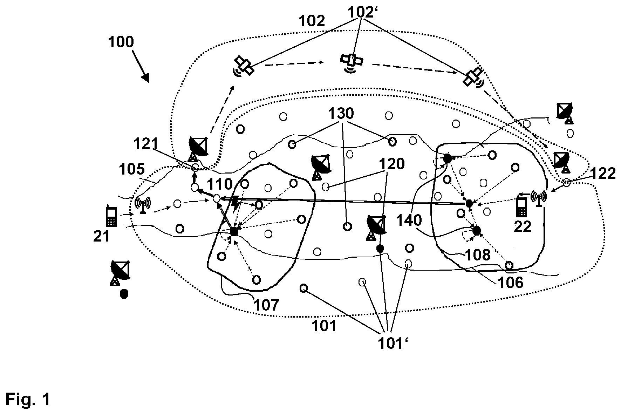

- **Figur 1**: zeigt eine schematische Situation zur Veranschaulichung des erfindungsgemäßen Verfahrens.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

In Figur 1 ist schematisch eine Situation zur Veranschaulichung des erfindungsgemäßen Verfahrens dargestellt, bei dem wenigstens ein Datenpaket (aber in aller Regel eine Mehrzahl von solchen Datenpaketen) von einem Absender 21 (insbesondere in Form eines Telekommunikationsendgeräts bzw. UE(1)) zu einem Empfänger 22 (insbesondere ebenfalls in Form eines Telekommunikationsendgeräts bzw. UE(2)) übertragen oder transportier wird. Das wenigstens eine Datenpaket ist insbesondere ein auf eine Echtzeitanwendung bezogenes Datenpaket oder es wird als ein prioritär zu transportierendes Datenpaket behandelt. Zum Transport des Datenpakets oder der Mehrzahl an Datenpaketen müssen eine oder mehrere Routing-Entscheidungen zum Routen durch eine Mehrzahl von Netzknoten des Telekommunikationsnetzes 100 getroffen werden. Das Telekommunikationsnetz 100 umfasst hierbei wenigstens ein erstes Telekommunikationsteilnetz 101, umfassend erdgebundene Netzknoten 101', und ein zweites Telekommunikationsteilnetz 102, umfassend satellitengebundene Netzknoten 102', wobei das wenigstens eine Datenpaket zumindest teilweise über das erste Telekommunikationsteilnetz 101 und zumindest teilweise über das zweites Telekommunikationsteilnetz 102 geroutet wird. Erfindungsgemäß wird insbesondere die Situation adressiert, dass in wenigstens einem Teilbereich 107, 108 des ersten Telekommunikationsteilnetzes 101 eine zu geringe Quality-of-Service-Situation oder eine Überlastsituation detektiert wird und eine korrespondierende Überlastinformation oder Quality-of-Service-Information an einen als Relais-Routing-Knoten 110 fungierenden Netzknoten 101' übertragen wird.

Erfindungsgemäß weist das Verfahren zumindest die Schritte wie folgt auf:
-- in einem ersten Schritt wird durch den Relais-Routing-Knoten 110 des ersten Telekommunikationsteilnetzes 101 eine Umrouting-Entscheidung bezüglich des wenigstens einen Datenpakets getroffen, wobei das Datenpaket mit einer Mehrzahl von Via-Punkt-Informationen ergänzt wird, wobei die Via-Punkt-Informationen jeweils auf Relais-Knoten 120 bezogen sind, die jeweils einen Übergang zwischen dem ersten Telekommunikationsteilnetz 101 und dem zweiten Telekommunikationsteilnetz 102 bilden oder ermöglichen,
-- in einem zweiten, dem ersten Schritt nachfolgenden, Schritt wird das wenigstens eine Datenpaket über die den Via-Punkt-Informationen entsprechenden Relais-Knoten 120 zum Empfänger 22 oder in Richtung zum Empfänger 22 geroutet, wobei jeweils nach einem Passieren eines Relais-Knotens 120 die diesem Relais-Knoten zugeordnete Via-Punkt-Information aus dem wenigstens einen Datenpaket gelöscht wird.

Insbesondere wird im ersten Schritt das wenigstens eine Datenpaket mit einer ersten Via-Punkt-Information und einer zweiten Via-Punkt-Information ergänzt, wobei die erste Via-Punkt-Information auf einen ersten Relais-Knoten 121 bezogen ist und die zweite Via-Punkt-Information auf einen zweiten Relais-Knoten 122 bezogen ist, wobei das wenigstens eine Datenpaket zwischen dem ersten und zweiten Relais-Knoten 121, 122 mittels Satelliten 102' im zweiten Telekommunikationsteilnetz 102 transportiert wird, indem im zweiten Schritt nach dem Passieren des ersten Relais-Knotens 121 die erste Via-Punkt-Information aus dem wenigstens einen Datenpaket gelöscht wird und nach dem Passieren des zweiten Relais-Knotens 122 die zweite Via-Punkt-Information aus dem wenigstens einen Datenpaket gelöscht wird.

In Figur 1 ist der Weg bzw. die Route des Datenpakets vom Absender 21 zum Empfänger 22 mit Pfeilen ausgehend vom Absender 21 über 110 und 121 (nicht durch Teilgebiet 107) bis hin zum Empfänger 22 dargestellt. Zwischen dem Absender 21 bis zum ersten Relais-Knoten 121 sind die Pfeile durchgezogen eingezeichnet (während das Datenpaket im ersten Telekommunikationsteilnetz 101 geroutet wird). Zwischen dem ersten Relais-Knoten 121 und dem zweiten Relais-Knoten 122 sind die Pfeile als gestrichelte Pfeile eingezeichnet (während das Datenpaket im zweiten Telekommunikationsteilnetz 102 geroutet wird). Zwischen dem zweiten Relais-Knoten 122 und dem Empfänger 22 sind die Pfeile wiederum durchgezogen eingezeichnet (während das Datenpaket wiederum im ersten Telekommunikationsteilnetz 101 geroutet wird).

Besonders bevorzugt ist es erfindungsgemäß, wenn - in Vorbereitung der bezüglich des wenigstens einen Datenpakets getroffenen Umrouting-Entscheidung des ersten Schritt - in einem ersten Teilschritt des ersten Schritts ein ausschließlich innerhalb des ersten Telekommunikationsteilnetzes 101 verlaufender, erwarteter Routenkorridor 105, 106 zwischen dem Absender 21 und dem Empfänger 22 geprüft wird, wobei die Umrouting-Entscheidung im Falle einer zu geringen Quality-of-Service-Situation oder einer Überlastsituation in wenigstens einem Teilbereich 107, 108 des ersten Telekommunikationsteilnetzes 101 getroffen wird, wobei das erste Telekommunikationsteilnetz 101 als Teil der Netzknoten 101' neben den Relais-Routing-Knoten 110 und den Relais-Knoten 120 eine Mehrzahl an Knoten-Last-Detektoren 130 und eine Mehrzahl an Knoten-Last-Kollektoren 140 aufweist, wobei die Knoten-Last-Detektoren 130 und die Knoten-Last-Kollektoren 140 die Überlastinformation und/oder die Quality-of-Service-Information an die Relais-Routing-Knoten 110 übertragen.

Ein UE ist ein User Equipment, bei uns z. B. ein Smartphone, dass sich per Funk- oder Kabelverbindung nur mit dem terrestrischen Netz verbinden kann. Dieses kann z. B. über einen Mobilfunkmasten oder über WLAN/LAN erfolgen. Die Kommunikation geht von einem (initiierenden) sendenden UE1 zu einem empfangenden UE2. Die "Rückantwort" von UE2 zu UE1 kann eine andere Route R21 nehmen als die Hin-Route R12.

Eine Route ist der Weg, den eine Information in einem Kommunikationsnetz über sogenannte Knoten nimmt. Eine Route kann bestimmt sein durch
-- Standard Routing Verfahren oder alternativ durch das
-- Routing Verfahren der vorliegenden Erfindung, welches auf Basis mehrerer Kriterien zwei Via Knoten (Via Punkte) vorgibt, über welche die speziell geführte Route gehen soll. Zwischen
-- Anfangspunkt und erstem Via Punkt,
-- erstem und zweitem Via Punkt,
-- zweitem Via Punkt und dem Endpunkt der Route
gelten wieder die bekannten Routing Verfahren. Ist der zweite Via Punkt der Relais-Knoten 2 (oder im terrestrischen Umrouten der Knoten KS2), so wird auch dieser Via Punkt genauso wie der erste Via Punkt bei seinem Erreichen gelöscht, da alle erreichten Via Punkte aus der Transportschicht entfernt werden. Der Empfänger UE2 (Bezugszeichen 22) sieht also keine Via Punkte in der Transportschicht des Datenpaketes.

Ein Routenkorridor ist ein geographisches Gebiet gebildet durch die Knoten des Telekommunikationsnetzes, durch welches eine Route mit einer gewissen Wahrscheinlichkeit vollumfänglich verlaufen wird. Der Routenkorridor ist somit vom verwendeten Routingverfahren abhängig. Wenn das Routing Verfahren gemäß der vorliegenden Erfindung nicht angewendet wird, so wird der Routenkorridor als Standard Routenkorridor eines bereits bekannten Standard Routing Verfahrens bezeichnet.

Ein KS Knoten ist ein Standard Knoten eines erdgebundenen Kommunikationsnetzes über den geroutet werden kann. Das terrestrische Netz kann aus unterschiedlichen Netzanteilen zusammengesetzt sein, z. B. IP-Festnetz, Mobilfunkmasten und in Nähe der UE als Netz-Zugangsanteile auch kleine LAN/WLAN Anteile. Ein Knoten-Last-Detektor ist ein KS, der seine eigene Last und Leistungsparameter (hier allg. Überlastinformation oder Quality-of-Service Parameter genannt; Monitoring der Quality-of-Service Parameter) aufzeichnet und diese Daten an einen Kollektor Knoten senden kann. Aus Kosten- und Kommunikationsgründen wird nicht jeder KS ein Knoten-Last-Detektor sein. Ein Knoten-Last-Kollektor ist ein KS, der als Kollektor Knoten die Last und Leistungsparameter (Quality-of-Service Monitoring) von zugeordneten Knoten-Last-Detektor aggregiert, wobei mehrere Knoten-Last-Detektor ein Gebiet T definieren. Die Knoten-Last-Detektor Zuordnungen zu einem Knoten-Last-Kollektor sind mittelfristig statisch, aber änderbar. Ein Knoten-Last-Kollektor kann gleichzeitig auch ein Knoten-Last-Detektor sein.

Ein Relais-Knoten ist ein KS, der als Relais Knoten in einem Kommunikationsnetz ausgeprägt ist und hybride Netze verbindet, hier beispielhaft ein homogenes oder inhomogenes terrestrisches (erstes Telekommunikationsteilnetz 101) mit einem satellitenbasierten Netz (zweites Telekommunikationsteilnetz 102).

Erfindungsgemäß kann das allgemeine terrestrische Netz aus unterschiedlichen Netzanteilen (inhomogenes Netz) zusammengesetzt sein, z. B. IP-Festnetz sowie Mobilfunkmasten und in Nähe der UE als Netz-Zugangsanteile auch diverse LAN/WLAN Anteile. Ein kleinster Anteil eines terrestrischen Netzes könnte auch eine spezielle Verbindung nur zwischen zwei geographisch weiter entfernten Knoten sein, z. B. eine Backhaul-Verbindung zwischen zwei weiter entfernten Mobilfunk-Knoten, um andere Zwischen-Knoten zu entlasten und die Durchsatzgeschwindigkeit zu erhöhen. Anfangs- und Endknoten eines Überseekabels können auch als separates Teilnetz betrachtet werden. Ein satellitenbasiertes Netz kann auch als ein hybrides Satellitennetz bestehen, also aus beliebigen Anteilen von LEO-, GEO-, MEO-Satelliten und ggf. sogar Drohnen bestehen.

Ein Teilgebiet Ti ist definiert durch ein zusammenhängendes Netzgebiet, bestehend aus mindestens zwei Knoten, für welches Lastinformationen (QoS) durch Knoten-Last-Detektor erhoben werden und in Knoten-Last-Kollektor aggregiert werden, um diese Information an Relais-Routing-Knoten weiterleiten zu können. Ein Teilgebiet kann auch aus nur einem Knoten bestehen, z. B. einem der zwei Endknoten eines Überseekabels oder einer Backhaul Verbindung. Ein Teilgebiet, das primär vor einer Überlast (zu schlechten QoS Werten) geschützt werden soll oder welches bei sehr schlechten QoS Werten umroutet werden soll, ist ein potenzielles Überlastgebiet. Wird Verkehr aus diesen Überlastgebieten in andere Gebiete mit guten QoS Werten umgeroutet, so werden diese Gebiete als Ausweichgebiete bezeichnet.

Ein Relais-Routing-Knoten ist ein Knoten, der aus den Knoten-Last-Kollektor die aktuellen Quality-of-Service-Werte der jeweiligen Teilgebiete Ti erhalten hat und der auch die Adressen der geeignetsten Relais-Knoten für Teil-Routen zwischen UE1 und UE2 kennt, indem er bei Bedarf der Nutzung eines Satellitennetzes den besten RN1 und den besten RN2 vorgibt.

Der Quality-of-Service-Wert kann der Skalar einer Gewichtsfunktion gebildet aus mehreren Quality-of-Service-Einzelfaktoren QoS1, QoS2, ..., QoSn sein. Die Einzelfaktoren QoS, z.B. QoS1 und QoS2, können aber bzgl. der Entscheidung des Umroutens auch unabhängig voneinander bewertet werden und zu unabhängigen Umrouting Entscheidungen für eine UE1 zu UE2 Richtung führen. Auch mehrere Einzelfaktoren QoS können bei spezieller Gewichtung ein Umrouten empfehlen und sogar ein unterschiedliches Umrouten empfehlen als einzelne QoS. Im letzteren Fall muss dann eine Entscheidungsmatrix definiert werden, die die QoS Werte relativ zueinander bewertet.

Mit bestem Relais-Knoten 1 / Relais-Knoten 2 Paar ist das Paar gemeint, das die Überlastgebiete eines sonst üblichen Routen Korridors am besten umroutet. Dieses Umrouten erfolgt erfindungsgemäß von einem erdgebundenen Netz über ein Satellitennetz. Die Entscheidung über das Umrouten trifft immer der Relais-Routing-Knoten, da dieser alle Informationen dazu vorliegen hat:
-- Merkmale (geographisch und QoS) der Teilgebiete, der Standard Routenkorridore, der Ausweichgebiete sowie
-- die geographische Lage der UE1, UE2, KS und insbesondere der Relais-Knoten und
-- Trigger Werte für Entscheidungen, wie z.B. Schwellwerte (thresholds).

Auf dem Weg von UE1 zu UE2 können aber auch mehrere unterschiedliche Relais-Routing-Knoten eine Umrouting-Entscheidung treffen. So z.B. ein erster Relais-Routing-Knoten auf der Route (und wenn dessen vorgegebene Umgehungsroute abgearbeitet wurde, kann ein nächster RR wieder eine erneute Umroutentscheidung auf dem Weg zu UE2 treffen, usw. bis der UE2 erreicht wurde). Die freie Aufnahmekapazität der Ausweichgebiete zum Aufnehmen des Umroutens durch die Steuerung der Relais-Routing-Knoten muss hierbei bekannt sein. Im Sonderfall, dass nur sehr wenige sehr hoch ausgelastete Teilgebiete (Überlastgebiete) existieren und diese unbedingt vor einer Verschlechterung ihrer Quality-of-Service-Werte bewahrt werden sollen, können die Merkmale aller Ausweichgebiete (alle Gebiete außer der Überlastgebiete) unberücksichtigt bleiben.

Erfindungsgemäß muss ein Relais-Knoten 1 auch die Möglichkeit haben, ein Datenpaket abzulehnen, was ein solcher Relais-Knoten 1 dadurch macht, dass es die zwei Via Punkte im Paket eliminiert und es danach an den Absender (den vorherigen Knoten oder einen anderen Nachbarknoten) zurücksendet. Erfindungsgemäß wird auf eine Zentrale, die die Abstimmungen für geographische Teilgebiete vornimmt, verzichtet, um den zusätzlichen erheblichen Kommunikationsaufwand hierfür zu vermeiden. Die Intelligenz ist lokal in jedem Relais-Routing-Knoten vorhanden, der für jedes Datenpaket, das noch keine Via Punkte enthält und nicht a priori vom Umrouten ausgeschlossen ist, die Umrouting-Entscheidung unabhängig von den Entscheidungen anderer Relais-Routing-Knoten zu anderen Verbindungen UE1* zu UE2* (in Figur 1 nicht dargestellt) treffen kann. Ein Relais-Routing-Knoten kennt die geographische Lage der wichtigsten KS und die geographische Lage und Ausdehnung aller Teilgebiete, auch die genauen Grenzen der Teilgebiete, also die Ausdehnung. Diejenigen Datenpakete, die a priori vom erfindungsgemäßen Umrouten ausgeschlossen sind, sind solche Pakete, die per Flag in der Transportschicht ausgeschlossen sind - z. B. weil einen zeitunkritischen Dienst betreffend oder den Mehrwertdienst des Umroutens nicht beinhaltend.

Ein Relais-Routing-Knoten kann aufgrund des Zieles UE2 von Relais-Routing-Knoten aus einen Standardroutenkorridor ohne Umrouten geographisch ermitteln (Korridorgrenzen und Unschärfen). Ein Relais-Routing-Knoten erhält laufend aufdatiert aus den Knoten-Last-Kollektor die aktuellen Quality-of-Service-Werte der Teilgebiete, die potenziell vor Überlast zu schützen sind. Ein Relais-Routing-Knoten kennt auch die Quality-of-Service-Werte aller anderen Gebiete. Alle Quality-of-Service-Werte aller Gebiete können auch nur mittelfristig gültige Prognosewerte sein.

Somit ist im Rahmen der vorliegenden Erfindung insbesondere wesentlich, dass:
-- ein Relais-Routing-Knoten im Transportheader maximal 2 Via Punkte hinzufügen und
-- einzelne Via Punkte löschen kann, wenn ein Via Punkt passiert wurde.

Ein Relais-Routing-Knoten kennt auch je nach Ziel UE2 den möglichst ungestörten (d.h. möglichst ohne Routing durch Überlastgebiete oder mindere Quality-of-Service-Werte) Routenweg zu einem Relais-Knoten 1 oder KS 1. Ein Relais-Routing-Knoten kann auch erkennen, ob ein Datenpaket bevorzugt umgeroutet werden soll, sofern es ein Datenpaket zu einer zeitkritischen Anwendung wie Telefonie ist und der Standardweg UE1 zu UE2 ggf. nicht schnell genug wäre. Der Bedarf des bevorzugten Umroutens muss dann in einer oberen (unverschlüsselten!) Schicht des Protokolls, z.B. der Transportschicht, als Parameter implementiert sein. Entsprechendes gilt auch für die Via Partnerknoten Relais-Knoten 1/Relais-Knoten 2 oder KS1/KS2.

Ein lokaler arbeitender Relais-Routing-Knoten wird nicht die Informationen aller Knoten-Last-Kollektor vorrätig haben, sondern nur die seiner näheren Umgebung. Ein global arbeitender Relais-Routing-Knoten wird die Informationen aller Knoten-Last-Kollektor vorrätig haben. Diese Informationen können aus aktuellen Erhebungen in den Knoten-Last-Kollektor folgen und/oder aus Prognosemodellen auf Basis von Historienwerten in dem jeweiligen Relais-Routing-Knoten vorhergesagt werden.

Die Knotenfunktionalitäten Knoten-Last-Detektor, Knoten-Last-Kollektor, Relais-Routing-Knoten und Relais-Knoten 1/Relais-Knoten 2 (oder KS1/KS2) können in einem KS beliebig kombiniert vorliegen. Die Dichte dieser Funktionalitäten und die Differenzierung in unterschiedliche Teilgebiete sind u.a. entscheidend für den Nutzen der Erfindung.

Eine Überlast im System wirkt sich (im Mittel) verschlechternd auf die Qualität des Dienstes aus (d.h. auf die Quality-of-Service), wodurch unterschiedliche Aspekte betroffen sein können, wie z. B. die Dauer bis zu einem Verbindungsaufbau oder die Dauer der Übertragung eines Datenpaketes innerhalb eines näherungsweise (aber ausreichend genau) bekannten Routingkorridors. Erfindungsgemäß wird von der Situation ausgegangen, dass eine Gewichtsfunktion (Zielfunktion), bestehend aus Abhängigkeiten zu unterschiedlichen QoS Einzel-Kriterien, zu nutzen ist, um Quality-of-Service-Werte spezifisch zu definieren.

Im Rahmen der Beschreibung der vorliegenden Erfindung wurden einige Vereinfachungen gewählt, so z. B. ein Standardroutenkorridor und dessen Begrenzung durch eine Polygonzug oder Kriterien, die im Mittel für ein geographisches Gebiet gelten. Hierfür könnten Fehlerabschätzungen vorgenommen werden, die dann in Form von mitzuführenden abzuschätzenden Ungenauigkeiten bis hin zu den resultierenden finalen Entscheidungsgrößen auf Umrouten Ja/Nein und welches Umrouten genau fortgepflanzt werden können. Dieses ist hier der Einfachheit halber nicht beschrieben, da dies auch insbesondere von den genauen geographischen Gegebenheiten des Telekommunikationsnetzes 100 abhängt, z. B. von der Lage und Größe der Teilgebiete. Weitere Fehlereinflüsse sind für viele Größen auch von den Standard Routing Verfahren und deren Standardrouting Korridoren vorgegeben, die ebenfalls immer eine gewisse Ungenauigkeit besitzen müssen, da sie auch von der aktuellen Auslastung der einzelnen Knoten und ihren Auslastungen bzgl. der Verzweigungsrichtungen abhängig sind.

Die VIA Punkte sind nur bei Bedarf vom kontaktierten Relais-Routing-Knoten in die Transportschicht einzutragen, sofern die Transportschicht (oder die Applikationsschicht) ein Flag hierzu gesetzt hatte. Dieses Flag kann initial fest vom UE oder auch später dynamisch von einem Relais-Routing-Knoten gesetzt werden, sofern dieses Entlastungsrouting genutzt werden soll.

Ein Zwangs-Routing über nur 2 Via Punkte und insbesondere über Satelliten erscheint als absolut ausreichend, da
-- das exakte reale Routing durch Gebiete nie exakt vorhergesagt werden kann (bzw. zwanghaft vorgegeben werden sollte),
-- ein z.B. gezielt ausgewählter Via Punkt immer auch mehrere Überlastgebietes entlasten kann, da Überlastgebiete immer viele Knoten mit ungefähr identischer Auslastung enthalten werden,
-- da es RNs in ausreichender Dichte in den Stadtgebieten (potenzielle Überlastgebiete) geben sollte.

Voraussichtlich werden nie alle Satelliten des Satellitenteilnetzes voll ausgelastet werden. Speziell der Aufbau künftiger terrestrischer 5G Netze wird sehr kostenintensiv sein und spätere Erweiterungen werden immer nahezu flächendeckend für größere Teilgebiete (eine Stadt) notwendig sein und diese Erweiterungen werden sehr teuer sein und nur temporär ausgenutzt werden. Da ist es kostengünstiger die Engpässe über ein bedarfsorientiertes temporäres Routing über ein bestehendes Satellitennetz und dessen Unterauslastung abzudecken. Heutzutage erwartet man in Gebieten von erdgebundenen zellularen Mobilfunknetzen für die nächsten 10-15 Jahre einen dermaßen rapiden Anstieg des Kommunikationsaufkommens, dass angenommen wird, dass dieser Bedarf nicht ausreichend kostengünstig ohne den Einsatz von Satellitenkommunikation abdeckbar ist.

## Patentansprüche

1. Verfahren zum Routen wenigstens eines Datenpakets von einem Absender (21) zu einem Empfänger (22) mittels einer Mehrzahl von Netzknoten eines Telekommunikationsnetzes (100), wobei mittels des Telekommunikationsnetzes (100) das wenigstens eine Datenpaket zumindest teilweise über ein erstes Telekommunikationsteilnetz (101) umfassend erdgebundene Netzknoten (101') und zumindest teilweise über ein zweites Telekommunikationsteilnetz (102) umfassend satellitengebundene Netzknoten (102') geroutet wird, wobei in wenigstens einem Teilbereich (107, 108) des ersten Telekommunikationsteilnetzes (101) eine zu geringe Quality-of-Service-Situation oder eine Überlastsituation detektiert wird und eine korrespondierende Überlastinformation oder Quality-of-Service-Information an einen als Relais-Routing-Knoten (110) fungierenden Netzknoten (101') übertragen wird, wobei das wenigstens eine Datenpaket als ein auf eine Echtzeitanwendung bezogenes oder als ein prioritär zu transportierendes Datenpaket behandelt wird, wobei das Verfahren die nachfolgenden Schritte umfasst:
-- in einem ersten Schritt wird durch den Relais-Routing-Knoten (110) des ersten Telekommunikationsteilnetzes (101) eine Umrouting-Entscheidung bezüglich des wenigstens einen Datenpakets getroffen, wobei das Datenpaket mit einer ersten Via-Punkt-Information und einer zweiten Via-Punkt-Information ergänzt wird, wobei die erste Via-Punkt-Information auf einen ersten Relais-Knoten (121) bezogen ist und die zweite Via-Punkt-Information auf einen zweiten Relais-Knoten (122) bezogen ist, wobei der erste Relais-Knoten (121) und der zweite Relais-Knoten (122) jeweils einen Übergang zwischen dem ersten Telekommunikationsteilnetz (101) und dem zweiten Telekommunikationsteilnetz (102) bilden oder ermöglichen,
-- in einem zweiten, dem ersten Schritt nachfolgenden, Schritt wird das wenigstens eine Datenpaket über die den Via-Punkt-Informationen entsprechenden Relais-Knoten (120) zum Empfänger (22) oder in Richtung zum Empfänger (22) geroutet, wobei das wenigstens eine Datenpaket zwischen dem ersten und zweiten Relais-Knoten (121, 122) mittels Satelliten (102') im zweiten Telekommunikationsteilnetz (102) transportiert wird, indem nach dem Passieren des ersten Relais-Knotens (121) die erste Via-Punkt-Information aus dem wenigstens einen Datenpaket gelöscht wird und nach dem Passieren des zweiten Relais-Knotens (122) die zweite Via-Punkt-Information aus dem wenigstens einen Datenpaket gelöscht wird,
wobei an einem weiteren als Relais-Routing-Knoten (110) fungierenden Netzknoten (101') zwischen dem zweiten Relais-Knoten (122) und dem Empfänger (22) eine weitere Umrouting-Entscheidung bezüglich des wenigstens einen Datenpakets getroffen wird, wobei der weitere als Relais-Routing-Knoten (110) fungierende Netzknoten (101') einer der erdgebundenen Netzknoten (101') des ersten Telekommunikationsteilnetzes (101) ist, wobei das Datenpaket erneut mit einer Mehrzahl von Via-Punkt-Informationen ergänzt wird, wobei die Via-Punkt-Informationen jeweils auf Relais-Knoten (120) bezogen sind.

2. Verfahren nach Anspruch 1, **dadurch gekennzeichnet, dass** durch eine Mehrzahl von zwischen dem Absender (21) und dem Empfänger (22) transportierten Datenpaketen eine asynchrone Kommunikation zwischen dem Absender (21) und dem Empfänger (22) realisiert wird, wobei hinsichtlich jedes solchen Datenpakets eine separate oder unabhängige Umrouting-Entscheidung, insbesondere umfassend eine Mehrzahl von Via-Punkt-Informationen und sich beziehend auf unabhängig definierte Relais-Knoten (120), getroffen wird.

3. Verfahren nach einem der vorhergehenden Ansprüche, **dadurch gekennzeichnet, dass** - in Vorbereitung der bezüglich des wenigstens einen Datenpakets getroffenen Umrouting-Entscheidung des ersten Schritt - in einem ersten Teilschritt des ersten Schritts ein ausschließlich innerhalb des ersten Telekommunikationsteilnetzes (101) verlaufender, erwarteter Routenkorridor (105, 106) zwischen dem Absender (21) und dem Empfänger (22) geprüft wird, wobei die Umrouting-Entscheidung im Falle einer zu geringen Quality-of-Service-Situation oder einer Überlastsituation in wenigstens einem Teilbereich (107, 108) des ersten Telekommunikationsteilnetzes (101) getroffen wird, wobei das erste Telekommunikationsteilnetz (101) als Teil der Netzknoten (101') neben den Relais-Routing-Knoten (110) und den Relais-Knoten (120) eine Mehrzahl an Knoten-Last-Detektoren (130) und eine Mehrzahl an Knoten-Last-Kollektoren (140) aufweist, wobei die Knoten-Last-Detektoren (130) und die Knoten-Last-Kollektoren (140) die Überlastinformation und/oder die Quality-of-Service-Information an die Relais-Routing-Knoten (110) übertragen.

4. Verfahren nach einem der vorhergehenden Ansprüche, **dadurch gekennzeichnet, dass** die durch den Relais-Routing-Knoten (110) getroffene Umrouting-Entscheidung bezüglich des wenigstens einen Datenpakets von der Quality-of-Service-Information oder Überlastinformation oder von mehreren Quality-of-Service-Informationen oder von mehreren Überlastinformationen abhängt, insbesondere von einer oder mehrerer der nachfolgenden Informationen:
-- der Lastsituation und/oder einer Quality-of-Service-Information in einem Teilbereich (107, 108) oder in mehreren Teilbereichen (107, 108) des ersten Telekommunikationsteilnetzes (101) oder des zweiten Telekommunikationsteilnetzes (102),
-- von Routenkorridoren (105, 106) und/oder Ausweichgebieten und/oder der geographischen Lage des Absenders (21) und/oder des Empfängers (22),
-- von Trigger-Werten für Entscheidungen, insbesondere Threshold-Werte.

5. Telekommunikationsnetz (100) zum Routen wenigstens eines Datenpakets von einem Absender (21) zu einem Empfänger (22) mittels einer Mehrzahl von Netzknoten des Telekommunikationsnetzes (100), wobei das Telekommunikationsnetz (100) ein erstes Telekommunikationsteilnetz (101), ein zweites Telekommunikationsteilnetz (102), einen ersten Relais-Knoten (121) und einen zweiten Relais-Knoten (122) aufweist, wobei das erste Telekommunikationsteilnetz (101) erdgebundene Netzknoten (101') umfasst und das zweite Telekommunikationsteilnetz (102) satellitengebundene Netzknoten (102') umfasst, wobei der erste und zweite Relais-Knoten (121, 122) jeweils einen Übergang zwischen dem ersten Telekommunikationsteilnetz (101) und dem zweiten Telekommunikationsteilnetz (102) bilden oder ermöglichen, wobei das Telekommunikationsnetz (100) dazu konfiguriert ist, das wenigstens eine Datenpaket zumindest teilweise über die erdgebundenen Netzknoten (101') des ersten Telekommunikationsteilnetzes (101) und zumindest teilweise über die satellitengebundenen Netzknoten (102') des zweiten Telekommunikationsteilnetzes (102) zu routen, wobei in wenigstens einem Teilbereich (107, 108) des ersten Telekommunikationsteilnetzes (101) eine zu geringe Quality-of-Service-Situation oder eine Überlastsituation detektiert wird und eine korrespondierende Überlastinformation oder Quality-of-Service-Information an einen als Relais-Routing-Knoten (110) fungierenden Netzknoten (101') übertragen wird, wobei das wenigstens eine Datenpaket als ein auf eine Echtzeitanwendung bezogenes oder als ein prioritär zu transportierendes Datenpaket behandelt wird, wobei das Telekommunikationsnetz (100) derart konfiguriert ist, dass:
-- durch den Relais-Routing-Knoten (110) des ersten Telekommunikationsteilnetzes (101) eine Umrouting-Entscheidung bezüglich des wenigstens einen Datenpakets getroffen wird, wobei das Datenpaket mit einer ersten Via-Punkt-Information und einer zweiten Via-Punkt-Information ergänzt wird, wobei die erste Via-Punkt-Information auf einen ersten Relais-Knoten (121) bezogen ist und die zweite Via-Punkt-Information auf einen zweiten Relais-Knoten (122) bezogen ist, wobei der erste Relais-Knoten (121) und der zweite Relais-Knoten (122) jeweils einen Übergang zwischen dem ersten Telekommunikationsteilnetz (101) und dem zweiten Telekommunikationsteilnetz (102) bilden oder ermöglichen, sowie
-- das wenigstens eine Datenpaket über die den Via-Punkt-Informationen entsprechenden Relais-Knoten (120) zum Empfänger (22) oder in Richtung zum Empfänger (22) geroutet werden, wobei das wenigstens eine Datenpaket zwischen dem ersten und zweiten Relais-Knoten (121, 122) mittels Satelliten (102') im zweiten Telekommunikationsteilnetz (102) transportiert wird, indem nach dem Passieren des ersten Relais-Knotens (121) die erste Via-Punkt-Information aus dem wenigstens einen Datenpaket gelöscht wird und nach dem Passieren des zweiten Relais-Knotens (122) die zweite Via-Punkt-Information aus dem wenigstens einen Datenpaket gelöscht wird,
wobei das Telekommunikationsnetz (100) derart konfiguriert ist, dass an einem weiteren als Relais-Routing-Knoten (110) fungierenden Netzknoten (101') zwischen dem zweiten Relais-Knoten (122) und dem Empfänger (22) eine weitere Umrouting-Entscheidung bezüglich des wenigstens einen Datenpakets getroffen wird, wobei der weitere als Relais-Routing-Knoten (110) fungierende Netzknoten (101') einer der erdgebundenen Netzknoten (101') des ersten Telekommunikationsteilnetzes (101) ist, wobei das Datenpaket erneut mit einer Mehrzahl von Via-Punkt-Informationen ergänzt wird, wobei die Via-Punkt-Informationen jeweils auf Relais-Knoten (120) bezogen sind.

6. Computerprogramm umfassend Befehle, mit deren Hilfe die Schritte eines Verfahrens nach einem der Ansprüche 1 bis 5 durchführbar sind, wenn das Computerprogramm auf einer programmierbaren Einrichtung ausgeführt wird.

7. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 6 speichert oder überträgt oder wobei das computerlesbare Medium oder das Datenträgersignal den auf der programmierbaren Einrichtung auszuführenden Teil des Computerprogramms nach Anspruch 6 speichert oder überträgt.

## Claims

1. Method for routing at least one data packet from a sender (21) to a receiver (22) by means of a plurality of network nodes of a telecommunications network (100), wherein by means of the telecommunications network (100) the at least one data packet is routed at least partially via a first telecommunications subnetwork (101) comprising ground-based network nodes (101') and at least partially via a second telecommunications subnetwork (102) comprising satellite-based network nodes (102'), wherein in at least one partial area (107, 108) of the first telecommunications subnetwork (101) an insufficient quality-of-service situation or an overload situation is detected and a corresponding overload information or quality-of-service information is transmitted to a network node (101') functioning as a relay routing node (110), wherein the at least one data packet is treated as a data packet related to a real-time application or as a data packet to be transported with priority, wherein the method comprises the following steps:
-- in a first step, a rerouting decision regarding the at least one data packet is made by the relay routing node (110) of the first telecommunications subnetwork (101), wherein the data packet is supplemented with first via-point information and second via-point information, wherein the first via-point information relates to a first relay node (121) and the second via-point information relates to a second relay node (122), wherein the first relay node (121) and the second relay node (122) each form or enable a transition between the first telecommunications subnetwork (101) and the second telecommunications subnetwork (102),
-- in a second step, subsequent to the first step, the at least one data packet is routed via the relay nodes (120) corresponding to the via-point information to the receiver (22) or in the direction of the receiver (22), wherein the at least one data packet is transported between the first and second relay nodes (121, 122) by means of satellites (102') in the second telecommunications subnetwork (102), by deleting the first via-point information from the at least one data packet after passing the first relay node (121) and by deleting the second via-point information from the at least one data packet after passing the second relay node (122),
wherein at a further network node (101') functioning as a relay routing node (110) between the second relay node (122) and the receiver (22) a further rerouting decision regarding the at least one data packet is made, wherein the further network node (101') functioning as relay routing node (110) is one of the ground-based network nodes (101') of the first telecommunications subnetwork (101), wherein the data packet is again supplemented with a plurality of via-point information, wherein the via-point information each relate to relay nodes (120).

2. Method according to claim 1, **characterized in that** an asynchronous communication between the sender (21) and the receiver (22) is realized by a plurality of data packets transported between the sender (21) and the receiver (22), wherein with respect to each such data packet a separate or independent rerouting decision, in particular comprising a plurality of via-point information and relating to independently defined relay nodes (120), is made.

3. Method according to one of the preceding claims, **characterized in that --** in preparation of the rerouting decision made regarding the at least one data packet of the first step **--** in a first sub-step of the first step an expected route corridor (105, 106) running exclusively within the first telecommunications subnetwork (101) between the sender (21) and the receiver (22) is checked, wherein the rerouting decision is made in the case of an insufficient quality-of-service situation or an overload situation in at least one partial area (107, 108) of the first telecommunications subnetwork (101), wherein the first telecommunications subnetwork (101) comprises as part of the network nodes (101'), in addition to the relay routing nodes (110) and the relay nodes (120), a plurality of node load detectors (130) and a plurality of node load collectors (140), wherein the node load detectors (130) and the node load collectors (140) transmit the overload information and/or the quality-of-service information to the relay routing nodes (110).

4. Method according to one of the preceding claims, **characterized in that** the rerouting decision made by the relay routing node (110) regarding the at least one data packet depends on the quality-of-service information or overload information or on multiple quality-of-service information or on multiple overload information, in particular on one or more of the following information:
-- the load situation and/or quality-of-service information in one partial area (107, 108) or in multiple partial areas (107, 108) of the first telecommunications subnetwork (101) or of the second telecommunications subnetwork (102),
-- route corridors (105, 106) and/or alternative areas and/or the geographical location of the sender (21) and/or of the receiver (22),
-- trigger values for decisions, in particular threshold values.

5. Telecommunications network (100) for routing at least one data packet from a sender (21) to a receiver (22) by means of a plurality of network nodes of the telecommunications network (100), wherein the telecommunications network (100) comprises a first telecommunications subnetwork (101), a second telecommunications subnetwork (102), a first relay node (121) and a second relay node (122), wherein the first telecommunications subnetwork (101) comprises ground-based network nodes (101') and the second telecommunications subnetwork (102) comprises satellite-based network nodes (102'), wherein the first and second relay nodes (121, 122) each form or enable a transition between the first telecommunications subnetwork (101) and the second telecommunications subnetwork (102), wherein the telecommunications network (100) is configured to route the at least one data packet at least partially via the ground-based network nodes (101') of the first telecommunications subnetwork (101) and at least partially via the satellite-based network nodes (102') of the second telecommunications subnetwork (102), wherein in at least one partial area (107, 108) of the first telecommunications subnetwork (101) an insufficient quality-of-service situation or an overload situation is detected and a corresponding overload information or quality-of-service information is transmitted to a network node (101') functioning as a relay routing node (110), wherein the at least one data packet is treated as a data packet related to a real-time application or as a data packet to be transported with priority, wherein the telecommunications network (100) is configured such that:
-- a rerouting decision regarding the at least one data packet is made by the relay routing node (110) of the first telecommunications subnetwork (101), wherein the data packet is supplemented with first via-point information and second via-point information, wherein the first via-point information relates to a first relay node (121) and the second via-point information relates to a second relay node (122), wherein the first relay node (121) and the second relay node (122) each form or enable a transition between the first telecommunications subnetwork (101) and the second telecommunications subnetwork (102), and
-- the at least one data packet is routed via the relay nodes (120) corresponding to the via-point information to the receiver (22) or in the direction of the receiver (22), wherein the at least one data packet is transported between the first and second relay nodes (121, 122) by means of satellites (102') in the second telecommunications subnetwork (102), by deleting the first via-point information from the at least one data packet after passing the first relay node (121) and by deleting the second via-point information from the at least one data packet after passing the second relay node (122),
wherein the telecommunications network (100) is configured such that at a further network node (101') functioning as a relay routing node (110) between the second relay node (122) and the receiver (22) a further rerouting decision regarding the at least one data packet is made, wherein the further network node (101') functioning as relay routing node (110) is one of the ground-based network nodes (101') of the first telecommunications subnetwork (101), wherein the data packet is again supplemented with a plurality of via-point information, wherein the via-point information each relate to relay nodes (120).

6. Computer program comprising instructions by means of which the steps of a method according to one of claims 1 to 5 can be performed when the computer program is executed on a programmable device.

7. Computer-readable medium, provided for storing a computer program, or data carrier signal, provided for transmitting a computer program, wherein the computer-readable medium or the data carrier signal stores or transmits the computer program according to claim 6 or wherein the computer-readable medium or the data carrier signal stores or transmits the part of the computer program according to claim 6 to be executed on the programmable device.

## Revendications

1. Procédé de routage d'au moins un paquet de données d'un expéditeur (21) vers un destinataire (22) au moyen d'une pluralité de nœuds de réseau d'un réseau de télécommunications (100), dans lequel au moyen du réseau de télécommunications (100) l'au moins un paquet de données est routé au moins partiellement via un premier sous-réseau de télécommunications (101) comprenant des nœuds de réseau terrestres (101') et au moins partiellement via un deuxième sous-réseau de télécommunications (102) comprenant des nœuds de réseau satellites (102'), dans lequel dans au moins une zone partielle (107, 108) du premier sous-réseau de télécommunications (101) une situation de qualité de service insuffisante ou une situation de surcharge est détectée et une information de surcharge ou une information de qualité de service correspondante est transmise à un nœud de réseau (101') fonctionnant comme nœud de routage relais (110), dans lequel l'au moins un paquet de données est traité comme un paquet de données relatif à une application en temps réel ou comme un paquet de données à transporter en priorité, dans lequel le procédé comprend les étapes suivantes :
-- dans une première étape, une décision de reroutage concernant l'au moins un paquet de données est prise par le nœud de routage relais (110) du premier sous-réseau de télécommunications (101), dans lequel le paquet de données est complété par une première information de point de passage et une deuxième information de point de passage, dans lequel la première information de point de passage se réfère à un premier nœud relais (121) et la deuxième information de point de passage se réfère à un deuxième nœud relais (122), dans lequel le premier nœud relais (121) et le deuxième nœud relais (122) forment ou permettent chacun une transition entre le premier sous-réseau de télécommunications (101) et le deuxième sous-réseau de télécommunications (102),
**--** dans une deuxième étape, succédant à la première étape, l'au moins un paquet de données est routé via les nœuds relais (120) correspondant aux informations de point de passage vers le destinataire (22) ou en direction du destinataire (22), dans lequel l'au moins un paquet de données est transporté entre le premier et le deuxième nœud relais (121, 122) au moyen de satellites (102') dans le deuxième sous-réseau de télécommunications (102), en supprimant la première information de point de passage de l'au moins un paquet de données après le passage du premier nœud relais (121) et en supprimant la deuxième information de point de passage de l'au moins un paquet de données après le passage du deuxième nœud relais (122),
dans lequel au niveau d'un autre nœud de réseau (101') fonctionnant comme nœud de routage relais (110) entre le deuxième nœud relais (122) et le destinataire (22) une autre décision de reroutage concernant l'au moins un paquet de données est prise, dans lequel l'autre nœud de réseau (101') fonctionnant comme nœud de routage relais (110) est l'un des nœuds de réseau terrestres (101') du premier sous-réseau de télécommunications (101), dans lequel le paquet de données est à nouveau complété par une pluralité d'informations de point de passage, dans lequel les informations de point de passage se réfèrent chacune à des nœuds relais (120).

2. Procédé selon la revendication 1, **caractérisé en ce qu'**une communication asynchrone entre l'expéditeur (21) et le destinataire (22) est réalisée par une pluralité de paquets de données transportés entre l'expéditeur (21) et le destinataire (22), dans lequel concernant chaque tel paquet de données une décision de reroutage séparée ou indépendante, comprenant en particulier une pluralité d'informations de point de passage et se référant à des nœuds relais (120) définis indépendamment, est prise.

3. Procédé selon l'une des revendications précédentes, **caractérisé en ce que -- en** préparation de la décision de reroutage prise concernant l'au moins un paquet de données de la première étape **--** dans une première sous-étape de la première étape un couloir de route (105, 106) attendu s'étendant exclusivement à l'intérieur du premier sous-réseau de télécommunications (101) entre l'expéditeur (21) et le destinataire (22) est vérifié, dans lequel la décision de reroutage est prise dans le cas d'une situation de qualité de service insuffisante ou d'une situation de surcharge dans au moins une zone partielle (107, 108) du premier sous-réseau de télécommunications (101), dans lequel le premier sous-réseau de télécommunications (101) comprend comme partie des nœuds de réseau (101'), outre les nœuds de routage relais (110) et les nœuds relais (120), une pluralité de détecteurs de charge de nœud (130) et une pluralité de collecteurs de charge de nœud (140), dans lequel les détecteurs de charge de nœud (130) et les collecteurs de charge de nœud (140) transmettent l'information de surcharge et/ou l'information de qualité de service aux nœuds de routage relais (110).

4. Procédé selon l'une des revendications précédentes, **caractérisé en ce que** la décision de reroutage prise par le nœud de routage relais (110) concernant l'au moins un paquet de données dépend de l'information de qualité de service ou de l'information de surcharge ou de plusieurs informations de qualité de service ou de plusieurs informations de surcharge, en particulier d'une ou plusieurs des informations suivantes :
-- la situation de charge et/ou une information de qualité de service dans une zone partielle (107, 108) ou dans plusieurs zones partielles (107, 108) du premier sous-réseau de télécommunications (101) ou du deuxième sous-réseau de télécommunications (102),
-- des couloirs de route (105, 106) et/ou des zones alternatives et/ou la position géographique de l'expéditeur (21) et/ou du destinataire (22),
**--** des valeurs de déclenchement pour les décisions, en particulier des valeurs seuil.

5. Réseau de télécommunications (100) pour router au moins un paquet de données d'un expéditeur (21) vers un destinataire (22) au moyen d'une pluralité de nœuds de réseau du réseau de télécommunications (100), dans lequel le réseau de télécommunications (100) comprend un premier sous-réseau de télécommunications (101), un deuxième sous-réseau de télécommunications (102), un premier nœud relais (121) et un deuxième nœud relais (122), dans lequel le premier sous-réseau de télécommunications (101) comprend des nœuds de réseau terrestres (101') et le deuxième sous-réseau de télécommunications (102) comprend des nœuds de réseau satellites (102'), dans lequel le premier et le deuxième nœud relais (121, 122) forment ou permettent chacun une transition entre le premier sous-réseau de télécommunications (101) et le deuxième sous-réseau de télécommunications (102), dans lequel le réseau de télécommunications (100) est configuré pour router l'au moins un paquet de données au moins partiellement via les nœuds de réseau terrestres (101') du premier sous-réseau de télécommunications (101) et au moins partiellement via les nœuds de réseau satellites (102') du deuxième sous-réseau de télécommunications (102), dans lequel dans au moins une zone partielle (107, 108) du premier sous-réseau de télécommunications (101) une situation de qualité de service insuffisante ou une situation de surcharge est détectée et une information de surcharge ou une information de qualité de service correspondante est transmise à un nœud de réseau (101') fonctionnant comme nœud de routage relais (110), dans lequel l'au moins un paquet de données est traité comme un paquet de données relatif à une application en temps réel ou comme un paquet de données à transporter en priorité, dans lequel le réseau de télécommunications (100) est configuré de telle sorte que :
-- une décision de reroutage concernant l'au moins un paquet de données est prise par le nœud de routage relais (110) du premier sous-réseau de télécommunications (101), dans lequel le paquet de données est complété par une première information de point de passage et une deuxième information de point de passage, dans lequel la première information de point de passage se réfère à un premier nœud relais (121) et la deuxième information de point de passage se réfère à un deuxième nœud relais (122), dans lequel le premier nœud relais (121) et le deuxième nœud relais (122) forment ou permettent chacun une transition entre le premier sous-réseau de télécommunications (101) et le deuxième sous-réseau de télécommunications (102), ainsi que
-- l'au moins un paquet de données est routé via les nœuds relais (120) correspondant aux informations de point de passage vers le destinataire (22) ou en direction du destinataire (22), dans lequel l'au moins un paquet de données est transporté entre le premier et le deuxième nœud relais (121, 122) au moyen de satellites (102') dans le deuxième sous-réseau de télécommunications (102), en supprimant la première information de point de passage de l'au moins un paquet de données après le passage du premier nœud relais (121) et en supprimant la deuxième information de point de passage de l'au moins un paquet de données après le passage du deuxième nœud relais (122),
dans lequel le réseau de télécommunications (100) est configuré de telle sorte qu'au niveau d'un autre nœud de réseau (101') fonctionnant comme nœud de routage relais (110) entre le deuxième nœud relais (122) et le destinataire (22) une autre décision de reroutage concernant l'au moins un paquet de données est prise, dans lequel l'autre nœud de réseau (101') fonctionnant comme nœud de routage relais (110) est l'un des nœuds de réseau terrestres (101') du premier sous-réseau de télécommunications (101), dans lequel le paquet de données est à nouveau complété par une pluralité d'informations de point de passage, dans lequel les informations de point de passage se réfèrent chacune à des nœuds relais (120).

6. Programme informatique comprenant des instructions au moyen desquelles les étapes d'un procédé selon l'une des revendications 1 à 5 peuvent être exécutées lorsque le programme informatique est exécuté sur un dispositif programmable.

7. Support lisible par ordinateur, prévu pour stocker un programme informatique, ou signal de support de données, prévu pour transmettre un programme informatique, dans lequel le support lisible par ordinateur ou le signal de support de données stocke ou transmet le programme informatique selon la revendication 6 ou dans lequel le support lisible par ordinateur ou le signal de support de données stocke ou transmet la partie du programme informatique selon la revendication 6 devant être exécutée sur le dispositif programmable.
